# EUROPÄISCHE PATENTSCHRIFT

(11) **EP 2 152 455 B1**
(45) Veröffentlichungstag und Bekanntmachung des Hinweises auf die Patenterteilung: **11.04.2018**
(21) Anmeldenummer: 08707520.6
(22) Anmeldetag: 02.02.2008
(51) Int. Cl.: B23B 27/16, B23C 5/22

(54) **ACHTSCHNEIDIGER SCHNEIDEINSATZ SOWIE WERKZEUGHALTER HIERFÜR**
CUTTING INSERT CUTTING EIGHT WAYS, AND TOOL HOLDER FOR SAME
OUTIL DE COUPE À HUIT TRANCHANTS ET PORTE-OUTIL CORRESPONDANT

(30) Priorität: 14.05.2007 DE 102007022536
(43) Veröffentlichungstag der Anmeldung: 17.02.2010
(73) Patentinhaber: KENNAMETAL INC., Latrobe, PA 15650 (US)
(72) Erfinder: HARTLÖHNER, Rudi, 90587 Tuchenbach (DE); KAUFMANN, Igor, 90469 Nürnberg (DE)
(74) Vertreter: FDST Patentanwälte
(86) Internationale Anmeldenummer: PCT/EP2008/000839
(87) Internationale Veröffentlichungsnummer: WO 2008/138413

(56) Entgegenhaltungen:
- EP-A- 1 380 375
- DE-A1- 10 357 811
- JP-U- H0 685 712
- JP-U- S5 151 579
- US-A- 3 142 110
- US-A- 3 490 117

## Beschreibung

Die Erfindung bezieht sich auf einen achtschneidigen, dreh- und wendbaren Schneideinsatz mit zwei einander gegenüberliegenden, im Wesentlichen quadratischen Grundflächen, die um eine zu diesen senkrecht verlaufende Zentralachse gegeneinander verdreht sind, sowie mit vier identischen Seitenflächen. Sie bezieht sich weiter auf einen Werkzeughalter für einen solchen Schneideinsatz.

Aus der DE-AS 1 232 436 ist ein mehrschneidiger Schneidkörper aus hartem Schneidwerkstoff bekannt, dessen Schneidkörper aus zwei pyramidenstumpfartigen Schneidkörperhälften gebildet ist, deren einander unter Ausbildung von vier gleichartigen Seitenflächen gegenüberliegenden Grundflächen gegeneinander verdreht sind. Die Seitenflächen bilden mit beiden Grundflächen insgesamt acht Schneidkanten, die sich jeweils über die gesamte Länge der Seitenflächen bzw. der Grundflächen erstrecken. Eine rechtwinklig zu den Grundflächen der Schneidkörperhälften und somit senkrecht zur Zentralachse verlaufende zentrale Bohrung dient zur Aufnahme einer Schraube, mittels derer der Schneideinsatz in einer Ausnehmung eines Werkzeughalters befestigbar ist. Die vier identischen Seitenflächen weisen den jeweiligen Schneidkanten zugeordnete und an diese angrenzende ebene Spanflächen auf, die sich quer zur Zentralachse entlang der gesamten Schneidkante und in Richtung der Zentralachse bis zur Seitenflächenmitte hin erstrecken, in der die beiden Schneidkörperhälften aneinander grenzen.

Bei der beispielsweise in einen Drehmeißel eingesetzten Tangentialschneidplatte können deren acht Schneidkanten durch Drehen und Wenden der Schneidplatte im Werkzeughalter nacheinander in Benutzung genommen werden.

Aus der EP 1 380 375 A1 ist eine achtschneidige Tangential-Wendeschneidplatte mit zwei einander gegenüberliegenden, im Wesentlichen quadratischen Grundflächen sowie mit vier identischen Seitenflächen bekannt. Zwischen jeder Grundfläche und jeder Seitenfläche ist eine Hauptschneide gebildet ist, die sich über einen Teil der Länge der Seitenfläche erstreckt. In den Eckbereichen der Seitenflächen sind, welche mit Planfasen, die beispielsweise mit einem Radius versehen sind, an den Enden der Schneidkanten Neben- oder Planschneiden formen. Die Seitenflächen werden gebildet durch ein mittige erhabene Steg und Hohlkehlen zur Bildung von Spanflächen auf beiden Seiten der Stege.

Aus der JP 51 51579 U ist eine weitere Wendeschneidplatte zu entnehmen, die aus einem quaderförmigen Grundkörper besteht, in dessen plane Stirnseiten von diagonal gegenüberliebenden Bereichen Spannuten eingeschliffen sind, die randseitig in eine benachbarte Seitenfläche auslaufen.

Der Erfindung liegt die Aufgabe zugrunde, einen verbesserten achtschneidigen Schneideinsatz der eingangs genannten Art anzugeben. Des Weiteren soll ein zur Aufnahme eines derartigen Schneideinsatzes besonders geeigneter Werkzeughalter angegeben werden.

Diese Aufgabe wird erfindungsgemäß gelöst durch die Merkmale des Anspruches 1. Vorteilhafte Ausgestaltungen, Weiterbildungen und Varianten sind Gegenstand der auf diesen rückbezogenen Unteransprüche.

Der erfindungsgemäße, achtschneidige dreh- und wendbare Schneideinsatz weist in jeder Seitenfläche zwei in diese eingezogene Spanmulden auf. Diese Spanmulden erstrecken sich entlang der dieser zugeordneten Hauptschneide zwischen einer Eckenkante, an der die Hauptschneide in eine Nebenschneide übergeht, bis zu einem rückwärtigen Spanmuldenende. Die Hauptschneide und die dieser zugeordnete Spanmulde erstrecken sich dabei lediglich über einen Teil der Länge der Seitenfläche. Die Spanmulde endet demzufolge innerhalb dieser Seitenfläche am jeweiligen Spanmuldenende.

Vorzugsweise überschneiden sich die beiden Spanmulden innerhalb jeder Seitenfläche zumindest teilweise. Die Spanmulden sind dabei ebenso wie die Nebenschneiden, die Hauptschneiden und die diese verbindenden Eckenkanten, die zweckmäßigerweise kreis- oder bogenförmig ausgebildet sind, diagonal gegenüberliegend angeordnet. Jede Spanmulde sowie die dieser zugeordnete Hauptschneide und die ebenfalls dieser Spanmulde zugeordnete, im Wesentlichen quer zur Hauptschneide verlaufende Nebenschneide befinden sich somit stets im Bereich einer der beiden Schneidkörper- oder Schneideinsatzhälften, deren zueinander um die Breite der Seitenfläche beabstandeten Grundflächen gegeneinander verdreht sind. Innerhalb derselben Seitenfläche sind dann die anderen Schneiden (Haupt- und Nebenschneide) zusammen mit der diesen zugeordneten Spanmulde auf der gegenüberliegenden Seite in der anderen Schneidkörperhälfte angeordnet.

Zwischen den beiden Spanmulden der jeweiligen Seitenfläche ist ein Muldenkamm gebildet, der gegenüber den Muldenböden der beiden Spanmulden erhöht ist. Dabei ist der zwischen einander zugewandten Muldenrücken der beiden Spanmulden verlaufende Bereich oder Abschnitt des Muldenkamms vergleichsweise schmal gegenüber dem sich über die Spanmuldenenden der angrenzenden Spanmulden hinaus erstreckenden Bereich bzw. Abschnitt des Muldenkamms. Mit anderen Worten: Rückwärtig des jeweiligen Spanmuldenendes ist der Muldenkamm zu der der zugehörigen Spanmulde zugewandten Grundfläche hin aufgeweitet.

Dieser aufgeweitete Bereich des Muldenkamms erstreckt sich in zweckmäßiger Ausgestaltung bis zur Nebenschneide der jeweils angrenzenden Seitenfläche derselben Schneidkörperhälfte. Dort bildet der aufgeweitete Muldenkamm die Nebenfreifläche für diese Nebenschneide der jeweils angrenzenden Seitenfläche. Diese durch den jeweiligen Muldenkamm gebildeten Nebenfreiflächen liegen somit innerhalb dieser Seitenfläche sich ebenfalls diagonal gegenüber.

Gemäß einer zweckmäßigen Variante ist der zwischen den Spanmulden gebildete und sich über deren Spanmuldenenden hinaus symmetrisch über die Seitenfläche erstreckende Muldenkamm um zumindest eine Achse gedreht oder verkippt und somit schräg verlaufend ausgebildet. Die Verdrehachse ist dabei die Zentralachse und/oder eine hierzu senkrechte Achse des Schneidkörpers, die sich senkrecht zur Zentralachse erstreckt und normal zur jeweiligen Seitenfläche ist. In einem karthesischen Koordinatensystem, in dem die Zentralachse in y-Richtung und die zu dieser Seitenfläche senkrechte Achse in z-Richtung verläuft, ist der Muldenkamm um eine in x-Richtung verlaufende und zu den beiden an diese Seitenfläche angrenzenden Seitenflächen senkrechte Achse zur Mitte dieser Seitenfläche hin geneigt.

Vorzugsweise zusätzlich ist der Muldenkamm auch um die Zentalachse (y-Richtung) wiederum zum Zentrum dieser Seitenfläche hin geneigt. Der dadurch etwa trichterförmige Muldenkamm dieser Seitenfläche weist somit im zentralen Bereich dieser Seitenfläche, d. h. in der Flächenmitte den tiefsten Punkt auf.

Gemäß einer geeigneten Ausgestaltung, insbesondere dieser Variante des Schneideinsatzes, ist ausgehend vom jeweiligen Spanmuldenende ein gegenüber dem Muldenboden erhabener und bezogen auf diese Seitenfläche ebener, d.h. nicht, insbesondere auch nicht zur Flächenmitte hin, geneigter und somit planer Flächenbereich ausgebildet. Bei dieser Ausgestaltung weist zweckmäßigerweise die jeweilige Spanmulde eine der jeweiligen Eckenkanten diagonal gegenüberliegende Muldenecke auf, mit der diese Spanmulde sowohl an den ebenen Flächenbereich als auch an den vergleichsweise schmalen Bereich oder Abschnitt des zentralen Muldenkamms angrenzt.

Grundsätzlich weist jede Spanmulde einen vergleichsweise langen Muldenrücken auf, der an die dieser Spanmulde zugeordneten Hauptschneiden herangeführt ist. Ein weiterer, vergleichsweise schmaler Muldenrücken derselben Spanmulde ist an die über die Eckenkante mit dieser Hauptschneide verbundene Nebenschneide herangeführt. Dabei kann in vorteilhafter Ausgestaltung der oder jeder dieser Muldenrücken unter Ausbildung einer abgesenkten Hauptschneide bzw. unter Ausbildung einer abgesenkten Nebenschneide zur Zentralachse hin (konkav) eingewölbt sein. Demzufolge sind dann die Hauptschneide und/oder die Nebenschneide im Kantenbereich zwischen dieser Seitenfläche und der dieser zugeordneten Grundfläche bzw. der an diese Seitenfläche angrenzenden Seitenfläche zur Zentralachse hin eingezogen. Die entsprechende Eckenkante weist dann einen Übergangsbereich auf, der gegenüber der eingezogenen Hauptschneide und der angrenzenden ebenfalls eingezogenen Nebenschneide erhaben ist.

Die Nebenschneiden aneinander angrenzender Seitenflächen sind im mittleren Bereich zwischen den beiden jeweils aneinander grenzenden Schneidkörperhälften teilweise überlappend, jedoch zueinander beabstandet aneinander vorbeigeführt. In diesem mittleren Bereich bilden die aneinander beabstandet vorbeigeführten Schneidenenden der Nebenschneiden in jeder dieser beiden aneinandergrenzenden Seitenflächen eine Versatzfläche aus, wobei diese beiden Versatzflächen unter einem Winkel, zweckmäßigerweise in einem stumpfen Winkel oder etwa rechtwinklig, aufeinander stehen.

Ein mehrschneidiger, dreh- und wendbarer Schneideinsatz, bei dem die Nebenschneiden aneinander angrenzender Seitenflächen endseitig zueinander beabstandet und unter Ausbildung von unter einem Winkel aufeinander stehenden Versatzflächen aneinander vorbeigeführt sind, ist bereits allein für sich erfinderisch. Diese Ausbildung der Nebenschneiden eines derartigen Schneideinsatzes stellt somit eine eigenständige Erfindung dar.

Aufgrund der vier identischen Seitenflächen und der diese begrenzenden zwei identischen Grundflächen weist der erfindungsgemäße Schneideinsatz eine 90°-Symmetrie auf. Die als Haupt- und Nebenschneiden wirksamen Schneiden oder Schneidkanten des Schneideinsatzes können somit durch jeweils eine 90°-Drehung des Schneideinsatzes in einem Werkzeughalter nacheinander in Benutzung genommen werden, bevor der Schneideinsatz im Werkzeughalter um 180° gewendet wird, um die weiteren vier Schneiden durch entsprechende 90°-Drehungen in Benutzung zu nehmen. Der insbesondere als Tangentialschneideinsatz geeignete Schneideinsatz ist hierzu bezogen auf die Längsachse des zu bearbeitenden Werkstücks im Werkzeughalter hochkant stehend angeordnet.

Ein besonders bevorzugter Werkzeughalter für einen solchen achtschneidigen, dreh- und wendbaren Schneideinsatz oder Tangentialschneideinsatz weist eine Ausnehmung als Plattensitz mit einer Anlagefläche zur Anlage des Schneideinsatzes mit dessen Grundflächen sowie zwei hierzu und zueinander im Wesentlichen rechtwinklig angeordnete Auflagebereiche zur Anlage des Schneideinsatzes mit dessen Seitenflächen auf. Diese Auflagebereiche sind zur Anlage der jeweiligen Seitenfläche mit deren gegenüber den Spanmulden erhabenen Flächenbereichen und/oder Muldenkämmen ausgebildet. Dabei weisen die Auflagebereiche zweckmäßigerweise einen nach Art eines Abdrucks des ebenen Flächenbereichs bzw. des Muldenkamms der Seitenflächen ausgebildeten Stützbereich auf. Mittels dieser Geometrie der als Plattensitz wirksamen Ausnehmung des Werkzeughalters, beispielsweise eines Drehwerkzeugs, insbesondere eines Drehmeißels, werden die bei der spanenden Bearbeitung entstehenden hohen Kräfte zuverlässig in den Werkzeughalter eingeleitet und somit von diesem zur Gewährleistung eines zerstörungssicheren Plattensitzes aufgenommen.

Die mit der Erfindung erzielten Vorteile bestehen insbesondere darin, dass bei der spanenden Bearbeitung eines Werkstücks mit einem solchen Schneideinsatz aufgrund der in die Seitenflächen eingebrachten oder eingeformten Spanmulden eine besonders gute Spanformung und ein besonders großer Spanbruchbereich erzielt wird. Zudem sind ein erhöhtes Spanvolumen durch einen vergleichsweise weichen Schnitt mit positivem radialem Spanwinkel sowie eine erhöhte Variabilität aufgrund eines Einstellwinkels von größer 90° realisierbar.

Der erfindungsgemäße Schneideinsatz wird vorteilhafterweise als Press- oder Spritzgussteil hergestellt. Ein üblicherweise im Anschluss an einen Pressvorgang eines solchen Schneidkörpers erforderlicher Schleifvorgang in einem weiteren Bearbeitungsschritt kann somit entfallen.

Nachfolgend werden Ausführungsbeispiele der Erfindung anhand einer Zeichnung näher erläutert. Darin zeigen:
- Fig. 1: in perspektivischer Ansicht einen achtschneidigen Schneideinsatz mit gegeneinander verdrehten Schneidkörperhälften und mit in die gleichartigen Seitenflächen eingezogenen Spanmulden,
- Fig. 2: den Schneideinsatz gemäß Fig. 1 in einer Seitenansicht auf eine seiner Grundflächen,
- Fig. 3: den Schneideinsatz in einer Ansicht auf eine seiner Seitenflächen,
- Fig. 4: eine Variante des Schneideinsatzes mit eingezogenen oder eingewölbten Hauptschneiden und eingezogenen bzw. eingewölbten Nebenschneiden in perspektivischer Ansicht,
- Fig. 5: in einer Ansicht gemäß Fig. 1 einen Schneideinsatz mit ebenen Flächenbereichen eines ansonsten geneigten oder verdrehten Muldenkamms,
- Fig. 6: in perspektivischer Ansicht einen Werkzeughalter zur Aufnahme eines derartigen Schneideinsatzes, und
- Fig. 7: in einer Seitenansicht den Werkzeughalter mit eingesetztem Schneideinsatz (Tangentialschneideinsatz).

Einander entsprechende Teile sind in allen Figuren mit den gleichen Bezugszeichen versehen.

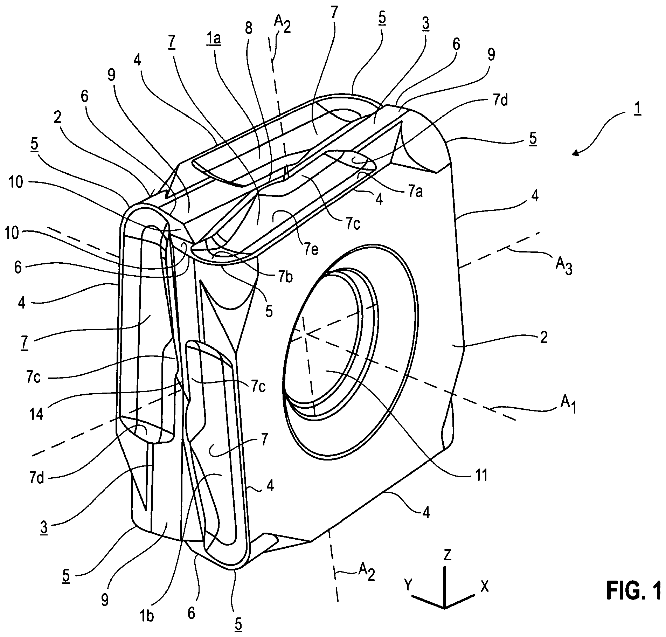

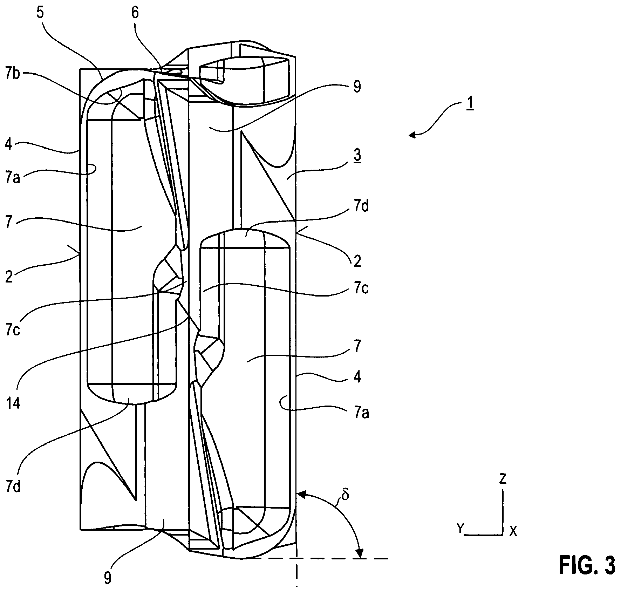

Gemäß den Figuren 1 bis 5 weist der nachfolgend als Schneideinsatz bezeichnete Tangentialschneideinsatz 1, der auch als Tangential-Schneidplatte bezeichnet werden kann, zwei einander gegenüberliegende, gleichartige und im Wesentlichen quadratische Grundflächen 2 sowie vier gleichartige Seitenflächen 3 auf, von denen in Fig. 1 lediglich zwei aneinander angrenzende Seitenflächen 3 und in Fig. 3 lediglich eine einzelne Seitenfläche 3 sichtbar sind. Der Schneideinsatz 1 kann auch als. Bezogen auf das dargestellte Koordinatensystem (x,y,z) verläuft die zu den Grundflächen 2 senkrechte zentrale Plattenachse oder Zentralachse A₁ in y-Richtung. Eine hierzu senkrechte Achse A₂ verläuft in z-Richtung und steht senkrecht auf zwei einander gegenüberliegenden Seitenflächen 3. Eine sowohl zur Zentralachse A₁ als auch zu dieser Achse A₂ senkrechte Achse A₃, die zu den beiden anderen gegenüberliegenden Seitenflächen 3 senkrecht verläuft, verläuft in x-Richtung. In der von den zu den Seitenflächen 3 normalen Achsen A₂ und A₃ aufgespannten Ebene befindet sich die Mittelebene der Schneidplatte 1, wobei zu dieser Mittelebene die beiden Grundflächen 2 entlang der Zentralachse A₁ äquidistant beabstandet sind.

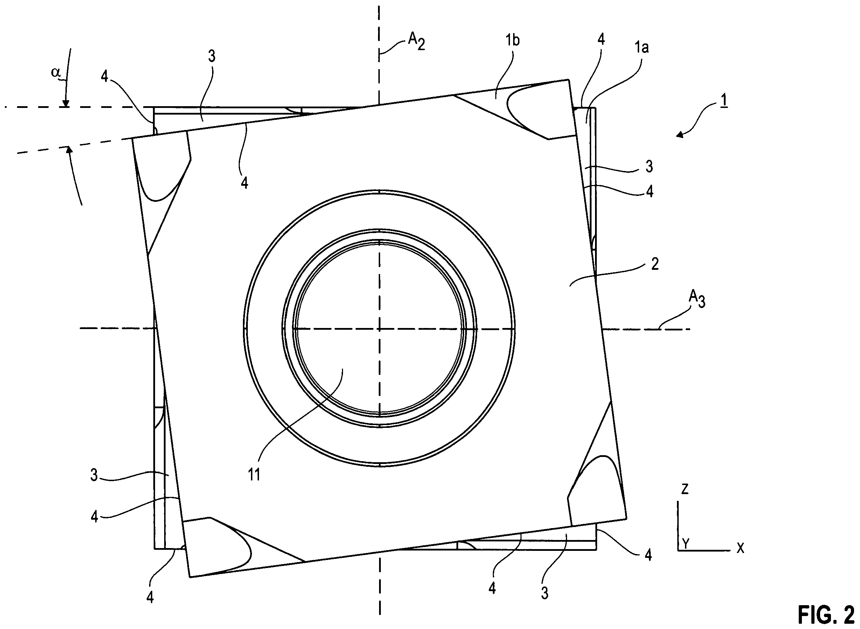

Die beiden Grundflächen 2 des Schneideinsatzes 1 sind zueinander um die Zentralachse A₁ verdreht, wie dies aus Fig. 2 besonders deutlich ersichtlich ist. Der Verdrehwinkel α der beiden Grundflächen 2 sollte grundsätzlich größer als 0° und kleiner als 20° sein und beträgt insbesondere (10 ± 5)°. Bevorzugt liegt der Verdrehwinkel im Bereich eines üblichen oder typischen Freiwinkel von ca. 6° und beträgt bevorzugt etwa 8°. Aufgrund der bezogen auf die x-Richtung - und ebenso auf die z-Richtung - um jeweils etwa 4° gegeneinander gedrehten Grundflächen 2 sind somit quasi zwei Schneidkörperhälften 1a und 1b des Schneideinsatzes 1 gebildet, die in der durch die beiden Achsen A₂ und A₃ aufgespannten Mittelebene (xz-Ebene) aneinander angrenzen bzw. ineinander übergehen.

Jede der gleichartigen oder identischen Seitenflächen 3 bildet mit jeder Grundfläche 2 eine Hauptschneide 4, die sich lediglich über einen Teil der Länge der jeweiligen Seitenfläche 3 erstreckt. Zudem weist jede Seitenfläche 3 einander gegenüberliegende abgerundete oder bogenförmige Eckenkanten 5 auf. Die jeweilige Eckenkante (Eckenradius) 5 bildet eine an die jeweilige Hauptschneide 4 angrenzende und sich in die an diese Seitenfläche 3 angrenzende Seitenfläche 3 erstreckende Nebenschneide 6. Jeder aus Hauptschneide 4, Eckenkante 5 und Nebenschneide 6 gebildeten Schneidkante ist eine in die jeweilige Seitenfläche 3 eingezogene, d.h. zur Zentralachse A₁ hin (konkav) eingewölbte Spanmulde 7 zugeordnet. Innerhalb der jeweiligen Seitenfläche 3 liegen sich somit zwei Spanmulden 7 - ebenso wie die zugeordneten Hauptschneiden 4, die Eckenkanten 5 und die Nebenschneiden 6 - diagonal gegenüber.

Jede Spanmulde 7 weist einen an die jeweilige Hauptschneide 4 herangezogenen, d. h. bezogen auf einen Muldenboden 7e hochgezogenen Muldenrücken 7a und einen an die jeweilige Nebenschneide herangeführten Muldenrücken 7b sowie einen der jeweils anderen Spanmulde 7 dieser Seitenfläche 3 zugewandten Muldenrücken 7c und ein Spanmuldenende 7d auf. Das Spanmuldenende 7d, das sich innerhalb der jeweiligen Seitenfläche 3 befindet, ist zu der nächstgelegenen angrenzenden Seitenfläche 3 beabstandet. Dieses Spanmuldenende 7d ist ebenfalls von einem gegenüber dem Muldenboden 7e hochgezogenen Muldenrücken gebildet.

Zwischen den beiden Spanmulden 7 der jeweiligen Seitenfläche 3 ist ein Muldenkamm oder Muldenscheitel 8 ausgebildet. Dieser Muldenkamm 8 ist im Bereich zwischen den sich zweckmäßigerweise überschneidenden Spanmulden 7 vergleichsweise schmal und im Bereich rückwärtig der Spanmuldenenden 7d vergleichsweise breit. Mit anderen Worten: Bezogen auf die Zentralachse A₁ ist die axiale Ausdehnung des Muldenrückens 8 im Bereich zwischen den beiden Spanmulden 7 schmaler als im Bereich zwischen den Spanmuldenenden 7d und der Nebenschneide 6 der dem Spanmuldenende 7d zugewandten, angrenzenden Seitenfläche 3. Dort bildet der vergleichsweise breite oder aufgeweitete Muldenkamm 8 jeweils eine Nebenfreifläche 9 für die Nebenschneide 6 der angrenzenden Seitenfläche 3 aus.

Wie aus Fig. 1 vergleichsweise deutlich ersichtlich ist, überschneiden sich die Nebenschneiden 6 der beiden aneinander angrenzenden Seitenflächen 3 - in der Ebene der jeweiligen Seitenfläche 3 bzw. im Bereich der durch die Achsen A₂ und A₃ aufgespannten Mittelebene (xz-Ebene) - zueinander beabstandet. Die beiden Nebenschneiden 6 gehen somit weder direkt noch indirekt ineinander über, sondern verlaufen zueinander beabstandet unter Ausbildung von Versatzflächen 10. Diese Versatzflächen 10 befinden sich in der Ebene der entsprechenden Seitenfläche 3 und stehen somit rechtwinklig oder in einem stumpfen Winkel zu- oder aufeinander.

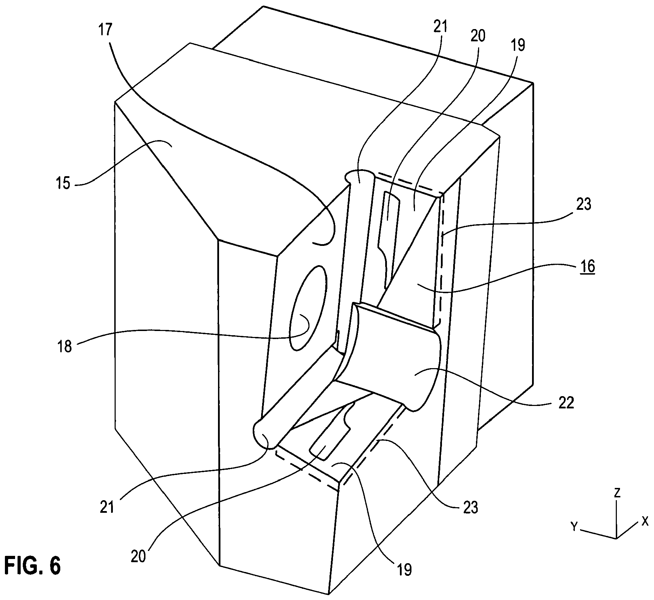

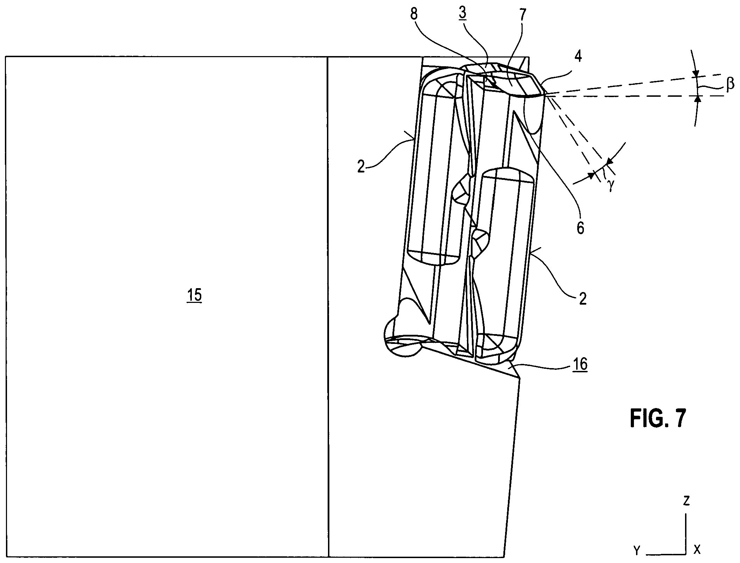

Eine zentrale Bohrung 11, die die Schneidplatte 1 entlang der Zentralachse A₁ durchsetzt, dient zur Aufnahme eines (nicht dargestellten) Fixierelementes, beispielsweise einer Schraube oder eines Bolzens, für eine Spann- und/oder Klemmfixierung des Schneideinsatzes 1 in einem in den Figuren 6 und 7 gezeigten Werkzeughalter eines Drehwerkzeugs.

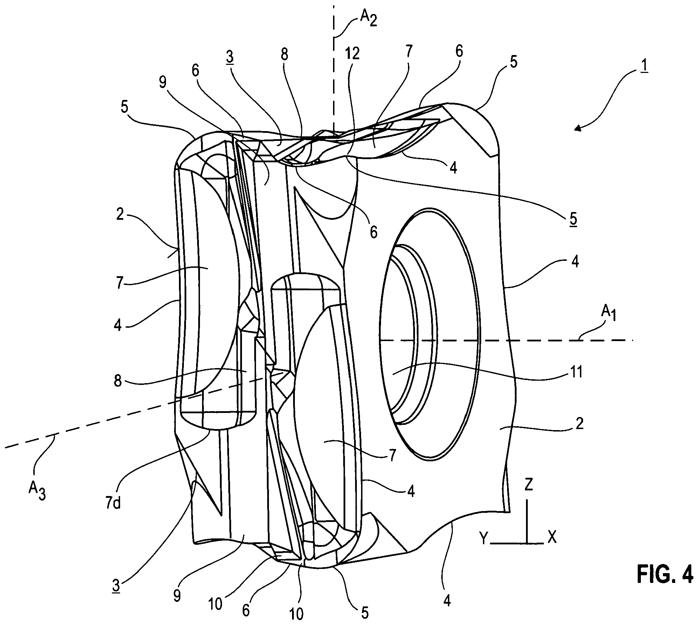

Der in Fig. 4 dargestellt Schneideinsatz 1 unterscheidet sich vom Schneideinsatz 1 gemäß den Fig. 1 bis 3 dadurch, dass die jeweilige Hauptschneide 4 sowie die jeweilige Nebenschneide 6 eingewölbt, d.h. zur Zentralachse A₁ hin eingezogen sind. Infolge dieser Geometrie stellt der Übergangsbereich zwischen der Hauptschneide 4 und der Nebenschneide 6 den höchsten Schneidkantenpunkt 12 innerhalb der Eckenkante 5 dar. Der Schneidkantenpunkt 12 und damit die Eckenkante 5 ist somit bezogen auf die durch die Zentralachse A₁ einerseits und die Achse A₂ bzw. die Achse A₃ aufgespannte Ebene weiter entfernt, als derjenige Schneidkantenbereich der eingezogenen oder eingewölbten Hauptschneide 4 und/oder Nebenschneide 6, der zur Zentralachse A₁ den geringsten oder minimalen Schneidkantenabstand aufweist.

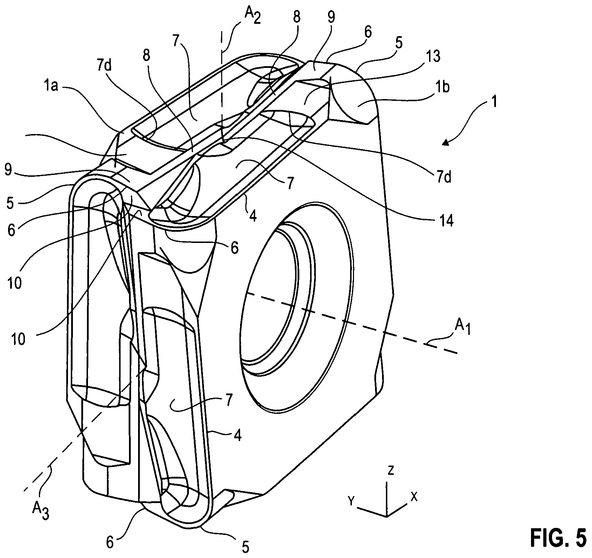

Der in Fig. 5 dargestellte Schneideinsatz 1 entspricht wiederum dem Schneideinsatz 1 gemäß Fig. 1, wobei im Unterschied zu dem dort dargestellten Schneideinsatz 1 jede Seitenfläche 3 zwei einander diagonal gegenüberliegende ebene Flächenbereiche 13 aufweist. Diese ebenen Flächenbereiche 13 schließen sich an das jeweilige Spanmuldenende 7d der in derselben Schneidkörperhälfte 1a, 1b sich befindenden Spanmulde 7 an. Diese, zur Achse A₂ oder zur Achse A₃ symmetrischen ebene Flächenbereiche 13 befinden sich somit zwischen dem jeweils angrenzenden Spanmuldenende 7d der entsprechenden Spanmulde 7 und der Nebenfreifläche 9 der Nebenschneide 6 der in dieser Schneidplattenhälfte 1a bzw. 1b angrenzenden Seitenfläche 3.

Bei der Ausführungsform des Schneideinsatzes 1 nach Fig. 1 und bei der Ausführungsform nach Figur 5 mit ebenem Flächenbereich 13 ist der Muldenkamm 8 zweckmäßigerweise zur zentralen Mittelebene (xz-Ebene) sowie zur Flächenmitte 14 der jeweiligen Seitenfläche 3 hin geneigt oder schräg verlaufend ausgebildet. Hierzu sind der Muldenkamm 8 und die der durch diesen gebildeten Nebenfreiflächen 9 einerseits um die Achse A₃ sowie andererseits um die Zentralachse A₁ verkippt. Die Orientierung der entsprechenden Verdrehung bzw. Verkippung ist dabei stets zur Platten- oder Flächenmitte 14 der Schneidplatte 1 hin gerichtet. Die beiden sich vom Flächenzentrum oder von der Flächenmitte 14 aus symmetrisch zu den beiden einander gegenüberliegenden, angrenzenden Seitenflächen 3 erstreckenden Abschnitte des Muldenkamms 8 sind demzufolge gegeneinander unter Ausbildung einer quasi trichterartigen Flächenform des Muldenkamms 8 geneigt oder verdreht.

Fig. 6 zeigt perspektivisch einen Werkzeughalter 15 für einen derartigen achtschneidigen, dreh- und wendbaren Schneideinsatz 1. Der Werkzeughalter 15 weist hierzu eine Ausnehmung 16 als Plattensitz für den Schneideinsatz 1 auf. Den als Drehmeißel ausgeführten Werkzeughalter 15 mit eingesetztem Schneideinsatz 1 zeigt Fig. 7 in einer Seitenansicht auf eine Seitenfläche 3.

Die Ausnehmung 16 weist eine Anlagefläche 17 auf, an der der Schneideinsatz 1 mit dessen Grundfläche 2 anliegt. Eine Gewindebohrung 18 im Bereich dieser Anlagefläche 17 dient zur Aufnahme der (nicht dargestellten) Fixierschraube, die die Zentralbohrung 11 des Schneideinsatzes 1 durchsetzt und mittels derer der Schneideinsatz 1 innerhalb der Ausnehmung 16 an diese Anlagefläche 17 im Montagezustand gespannt ist. Die Ausnehmung 16 weist zudem zwei im Wesentlichen rechtwinklig zueinander angeordnete Auflagebereiche 19 zur Anlage des Schneideinsatzes 1 mit jeweils zwei aneinander angrenzenden Seitenflächen 3 auf.

Im Bereich jeder dieser Auflagebereiche 19 ist ein Stützbereich 20 vorgesehen, mit der die jeweilige Seitenfläche 3 lediglich im Bereich des entsprechenden Muldenkamms 8 im entsprechenden Auflagebereich 19 der Ausnehmung 16 anliegt. Kreisbogenförmige Eckenbereiche 21 und 22 der Ausnehmung 16 bilden in den Werkzeughalter 15 einbezogene Aufnahmebereiche, in denen diejenigen Hauptschneiden 4, Nebenschneiden 6 bzw. Eckenkanten 5 des Schneidkörpers 1 einliegen, die zwischen den in der Ausnehmung 16 einliegenden Seitenflächen 3 und der an der Anlagefläche 17 anliegenden Grundfläche 2 gebildet sind.

Der oder jeder Auflagebereich 19 kann auch durch ein beispielsweise plattenartiges (strichliniert dargestelltes) Auflageelement 23 als zusätzliche Unterlage gebildet sein, welches in die Ausnehmung 16 eingesetzt und dort fixiert wird. Ein solches, vorzugsweise aus einem harten Material bestehendes zusätzliches Auflageelement 23 ist insbesondere bei einer schweren Zerspanung vorteilhaft.

Wie aus Fig. 7 vergleichsweise deutlich ersichtlich ist, ist der Schneideinsatz 1 im Werkzeughalter 15 bezogen auf die in y-Richtung verlaufende Längsachse des zu bearbeitenden (nicht dargestellten) Werkstücks hochkantstehend angeordnet. Die bei dieser Anordnung der Schneidplatte 1 im Einsatz befindliche Haupt- und Nebenschneide 4 bzw. 6 führen zwar aufgrund der negativen Lage der Schneidplatte 1 im Werkzeughalter 15 und infolge der gegenüber der an der Anlagefläche 17 der Ausnehmung 16 anliegenden Grundfläche 2 verdrehten, sich im Einsatz befindenden Grundseite 2 grundsätzlich zu einem negativen radialen Spanwinkel. Die bevorzugt eingezogenen Ausgestaltung oder Geometrie der Nebenschneide 6 führt jedoch insgesamt zu einem positiven radialen Spanwinkel β.

Analog sind auch die Verhältnisse bezüglich des axialen Spanwinkels, der bei einer entsprechenden Einbaulage des Schneideinsatzes 1, wie dieser in Fig. 2 dargestellt ist, ebenfalls grundsätzlich zu einem negativen Spanwinkel entsprechend dem Neigungs- oder Verdrehwinkel α führt. Die eingezogene oder abgesenkte Ausgestaltung bzw. Geometrie der Hauptschneide 4 gemäß der Ausführungsform nach Fig. 4 führt jedoch wiederum insgesamt zu einem positiven axialen Spanwinkel γ. In dieser Ausgestaltung des Schneideinsatzes 1 und dessen Anordnung im Werkzeughalter 15 ist dieser als Tangentialschneideinsatz 1 mit sowohl positivem axialen Spanwinkel γ als auch positivem radialen Spanwinkel β wirksam. Ein erhöhte Variabilität des in den Werkzeughalter 15 eingesetzten Tangentialschneideinsatzes 1 ist durch den in Fig. 3 angedeuteten Einstellwinkel δ von vorzugsweise größer 90° ermöglicht.

Die als Spanmulden 7 ausgebildeten und somit als muldenartig tiefgezogenen, d. h. in die jeweilige Seitenfläche 3 zur Zentralachse A1 hin eingewölbten Spanleitflächen gewährleisten eine besonders zuverlässige Spanabfuhr bei der Drehbearbeitung des Werkstücks. Infolge des durch die symmetrische Einformung der Spanmulden 7 in die Seitenflächen 3 des achtschneidigen Schneideinsatzes 1 ebenfall einbringbaren Muldenrücken 8 sind sowohl besonders wirksam ausgeprägte Nebenfreiflächen 9 als auch besonders geeignete Stützstellen oder Stützbereiche 20 für einen zuverlässigen Plattensitz des plattenartigen Schneideinsatz 1 (Schneidplatte) im Werkzeughalter 15 hergestellt.

## Patentansprüche

1. Achtschneidiger dreh- und wendbarer Schneideinsatz (1) mit zwei einander gegenüberliegenden, im Wesentlichen quadratischen Grundflächen (2) sowie mit vier identischen Seitenflächen (3),
- wobei zwischen jeder Grundfläche (2) und jeder Seitenfläche (3) eine Hauptschneide (4) gebildet ist, die sich lediglich über einen Teil der Länge der Seitenfläche (3) erstreckt,
- wobei jede Seitenfläche (3) zwei einander diagonal gegenüberliegende kreis- oder bogenförmig ausgebildete Eckenkanten (5) aufweist, die eine an die jeweilige Hauptschneide (4) angrenzende Nebenschneide (6) ausbilden,
- wobei jede Seitenfläche (3) zwei in die Seitenfläche (3) eingezogene Spanmulden (7) aufweist, die ausgehend von der jeweiligen Eckenkante (5) sich entlang der dieser zugeordneten Hauptschneide (4) bis zu einem rückwärtigen Spanmuldenende (7d) erstrecken,
- wobei zwischen den Spanmulden (7) ein gegenüber den Muldenböden (7e) der Spanmulden (7) erhabener Muldenkamm (8) gebildet ist, der sich symmetrisch über die Spanmuldenenden (7d) der angrenzenden Spanmulden (7) hinaus erstreckt und ausgehend vom jeweiligen Spanmuldenende (7d) zur der dieser Spanmulde (7) zugewandten Grundflächen (2) hin aufgeweitet ist, wobei die quadratischen Grundflächen (2) um eine zu diesen senkrecht verlaufende Zentralachse (A₁) gegeneinander verdreht sind.

2. Schneideinsatz (1) nach Anspruch 1,
**dadurch gekennzeichnet,**
**dass** sich die beiden Spanmulden (7) innerhalb derselben Seitenfläche (3) über die Flächenmitte (14) hinaus erstrecken.

3. Schneideinsatz (1) nach Anspruch 1 oder 2,
**dadurch gekennzeichnet,**
**dass** der Muldenkamm (8) zwischen einander zugewandten Muldenrücken (7c) der beiden Spanmulden (7) derselben Seitenfläche (3) gebildet ist

4. Schneideinsatz (1) nach einem der Ansprüche 1 bis 3,
**dadurch gekennzeichnet,**
**dass** sich der Muldenkamm (8) bis zur Nebenschneide (6) der jeweils angrenzenden Seitenfläche (3) hin erstreckt und dort eine Nebenfreifläche (9) für die Nebenschneide (6) der angrenzende Seitenfläche (3) bildet.

5. Schneideinsatz (1) nach einem der Ansprüche 1 bis 4,
**dadurch gekennzeichnet,**
**dass** der Muldenkamm (8) zur Flächenmitte (14) der Seitenfläche (3) hin geneigt verlaufend ausgebildet ist.

6. Schneideinsatz (1) nach Anspruch 5,
**dadurch gekennzeichnet,**
**dass** der Muldenkamm (8) um die Zentralachse (A₁) und/oder um eine Achse (A₃) verdreht ist, die zur Zentralachse (A₁) und einer hierzu senkrechten Achse (A₂) quer verläuft.

7. Schneideinsatz (1) nach einem der Ansprüche 1 bis 6,
**dadurch gekennzeichnet,**
**dass** ausgehend vom jeweiligen Spanmuldenende (7d) ein gegenüber dem Muldenboden (7e) erhabener und bezogen auf diese Seitenfläche (3) ebener Flächenbereich (13) ausgebildet ist.

8. Schneideinsatz (1) nach einem der Ansprüche 1 bis 7,
**dadurch gekennzeichnet,**
**dass** jede Spanmulde (7) einen an die zugeordnete Hauptschneide (4) herangeführten Muldenrücken (7a) und einen an die zugeordnete Nebenschneide (6) herangeführten Muldenrücken (7b) aufweist, wobei der Muldenrücken (7a) und/oder der Muldenrücken (7b) unter Ausbildung einer abgesenkten Hauptschneide (4) bzw. einer abgesenkten Nebenschneide (6) zur Zentralachse (A₁) hin eingewölbt ist.

9. Schneideinsatz (1) nach einem der Ansprüche 1 bis 8,
**dadurch gekennzeichnet,**
**dass** die Nebenschneiden (6) aneinander angrenzender Seitenflächen (3) endseitig zueinander beabstandet und unter Ausbildung von unter einem Winkel aufeinander stehenden Versatzflächen (10) aneinander vorbei geführt sind.

10. Schneideinsatz (1) nach einem der Ansprüche 1 bis 9,
**dadurch gekennzeichnet,**
**dass** die Eckenkanten (5) abgerundet, insbesondere kreis- oder bogenförmig ausgebildet, sind.

11. Werkzeughalter (15) mit einem Schneideinsatz (1) nach einem der Ansprüche 1 bis 10.

12. Werkzeughalter (15) nach Anspruch 13,
**gekennzeichnet durch**
eine Ausnehmung (16) als Plattensitz mit einer Anlagefläche (17) zur Anlage des Schneideinsatzes (1) mit dessen Grundflächen (2) sowie mit zwei im wesentlichen rechtwinklig zueinander angeordneten Auflagebereichen (19) zur Anlage des Schneideinsatzes (1) mit zwei seiner Seitenflächen (3), wobei die Auflagebereiche (19) zur Anlage der jeweiligen Seitenfläche (3) mit deren gegenüber den Spanmulden (7) erhabenen Flächenbereichen (8,9,13) ausgebildet ist.

13. Werkzeughalter (15) nach Anspruch 12 oder 13,
**dadurch gekennzeichnet,**
**dass** die Auflagebereiche (19) einen nach Art eines Abdrucks des Muldenkamms (8,9) und/oder des ebenen Flächenbereichs (13) der Seitenflächen (3) ausgebildeten Stützbereich (20) aufweist.

14. Werkzeughalter (15) nach Anspruch 12 oder 13,
**dadurch gekennzeichnet,**
**dass** die Ausnehmung (16) einen im Wesentlichen quadratischen Anlagebereich (17) zur Anlage des Schneideinsatzes (1) mit dessen Grundfläche (2) aufweist.

15. Werkzeughalter (15) nach einem der Ansprüche 12 bis 15,
**dadurch gekennzeichnet,**
**dass** der oder jeder Auflagebereich (19) durch ein in die Ausnehmung (16) eingesetztes, insbesondere aus einem Hartstoff bestehendes, Auflageelement (23) gebildet ist.

## Claims

1. Eight-edged, rotatable, and reversible cutting insert (1) having two opposing, essentially square base faces (2), as well as four identical lateral faces (3),
- wherein, between each base face (2) and each lateral face (3), a main cutting edge (4) is formed, which extends only over part of the length of the lateral face (3),
- wherein each lateral face (3) has two diagonally opposing, circular or arc-shaped corner edges (5) which form a secondary cutting edge (6) adjacent to the respective main cutting edge (4),
- wherein each lateral face (3) has two chip grooves (7), extending into the lateral face (3), which, starting from the respective corner edge (5), extend along the main cutting edge (4) associated with it up to a rearward end of a chip recess (7d),
- wherein, between the chip recesses (7), a recess ridge (8), elevated with respect to the recess bottoms (7e) of the chip recesses (7), is formed which extends symmetrically beyond the ends (7d) of the adjacent chip recesses (7) and, starting from the respective chip recess end (7d), is widened toward the base faces (2) facing this chip recess (7), wherein the square base faces (2) are rotated relative to one another about a central axis (A₁) running perpendicularly to them.

2. Cutting insert (1) according to claim 1,
**characterized in that**
the two chip recesses (7) within the same lateral face (3) extend beyond the face center (14).

3. Cutting insert (1) according to claim 1 or 2,
**characterized in that**
the recess ridge (8) is formed between mutually facing recess backs (7c) of the two chip recesses (7) of the same lateral face (3).

4. Cutting insert (1) according to one of claims 1 through 3,
**characterized in that**
the recess ridge (8) extends up to the secondary cutting edge (6) of the respective adjacent lateral face (3) and there forms a secondary free surface (9) for the secondary cutting edge (6) of the adjacent lateral face (3).

5. Cutting insert (1) according to one of claims 1 through 4,
**characterized in that**
the recess ridge (8) runs at an inclination towards the face center (14) of the lateral face (3).

6. Cutting insert (1) according to claim 5,
**characterized in that**
the recess ridge (8) is rotated about the central axis (A₁) and/or about an axis (A₃) which runs transversely to the central axis (A₁) and to an axis (A₂) perpendicular thereto.

7. Cutting insert (1) according to one of claims 1 through 6,
**characterized in that**
starting from the respective chip recess end (7d), a surface area (13) is formed which is elevated with respect to the recess bottom (7e) and is planar with respect to this lateral face (3).

8. Cutting insert (1) according to one of claims 1 through 7,
**characterized in that**
each chip recess (7) has a recess back (7a) brought up to the associated main cutting edge (4) and a recess back (7b) brought up to the associated secondary cutting edge (6), wherein the recess back (7a) and/or the recess back (7b), while forming a lowered main cutting edge (4) or a lowered secondary cutting edge (6), are arched towards the central axis (A₁).

9. Cutting insert (1) according to one of claims 1 through 8,
**characterized in that**
the secondary cutting edges (6) of mutually adjoining lateral faces (3) are distanced from each other at the ends and are guided past each other, forming offset faces (10) which are at an angle to each other.

10. Cutting insert (1) according to one of claims 1 through 9,
**characterized in that**
the corner edges (5) are rounded - in particular, circular or arc-shaped.

11. Tool holder (15) with a cutting insert (1) according to one of claims 1 through 10.

12. Tool holder (15) according to claim 13,
**characterized by**
having a recess (16) as an insert pocket with a contact surface (17) for abutment of the cutting insert (1) with its base faces (2) and also with two, essentially, mutually perpendicular support areas (19) for accommodating the cutting insert (1) with two of its lateral faces (3), wherein the support areas (19) for abutment of the respective lateral face (3) are formed with their surface areas (8, 9, 13) elevated with respect to the chip recesses (7).

13. Tool holder (15) according to claim 12 or 13,
**characterized in that**
the support areas (19) have a bearing area (20) formed in the manner of an impression of the recess ridge (8, 9) and/or of the flat surface area (13) of the lateral faces (3).

14. Tool holder (15) according to claim 12 or 13,
**characterized in that**
the recess (16) has an essentially square contact area (17) for abutment of the cutting insert (1) with its base face (2).

15. Tool holder (15) according to one of claims 12 through 15,
**characterized in that**
the, or every, support area (19) is formed by a support element (23) - consisting, in particular, of a hard material - inserted into the recess (16).

## Revendications

1. Outil de coupe (1) rotatif et réversible à huit lames avec deux surfaces de base (2) opposées et essentiellement carrées ainsi que quatre faces latérales identiques (3),
- une lame principale (4) se trouve entre chaque surface de base (2) et chaque face latérale (3) et s'étend simplement sur une partie de la longueur de la face latérale (3),
- chaque face latérale (3) présente deux arêtes de bordure (5) circulaires ou voûtées opposées en diagonale qui forment une lame secondaire (6) adjacente à la lame principale (4) correspondante,
- Chaque face latérale (3) présente deux arêtes de coupe (7) repliée dans la face latérale (3) qui, à partir de l'arête de bordure (5) correspondante, s'étend le long de la lame principale (4) à laquelle elle est subordonnée jusqu'à une extrémité d'arête de coupe arrière (7d),
- entre les arêtes de coupe (7), il se forme entre les arêtes de coupe (7) en face de la base de l'arête (7e) une crête d'arête (8) en relief qui s'étend de manière symétrique au-dessus de l'extrémité de l'arête de coupe (7d) de l'arête de coupe (7) adjacente et, à partir de l'extrémité d'arête de coupe (7d) correspondante, est agrandie jusqu'à la surface de base (2) la plus proche de cette arête de coupe (7), la surface de base (2) carrée tournant autour d'un axe (A₁) qui lui est perpendiculaire.

2. L'outil de coupe (1) selon l'exigence 1,
**se caractérise par le fait**
**que** les deux arêtes de coupe (7) à l'intérieur de la même surface latérale (3) s'étendent au-delà du milieu de la surface (14).

3. L'outil de coupe (1) selon l'exigence 1 ou l'exigence 2
**se caractérise par le fait**
**qu'**il se forme une crête d'arête (8) entre les faces arrière d'arête apparentées (7c) des deux arêtes de coupe (7) de la même surface latérale (3)

4. L'outil de coupe (1) selon une des exigences de 1 à 3,
**se caractérise par le fait**
**que** la crête d'arête (8) s'étend jusqu'à la lame secondaire (6) de la surface latérale (3) adjacente et y forme une surface libre annexe (9) pour la lame annexe (6) de la surface latérale (3) adjacente.

5. L'outil de coupe (1) selon une des exigences de 1 à 4,
**se caractérise par le fait**
**que** la crête d'arête (8) est inclinée en direction du milieu (14) de la surface latérale (3).

6. L'outil de coupe (1) selon l'exigence 5,
**se caractérise par le fait**
**que** la crête d'arête (8) tourne autour de l'axe central (A₁) et/ou autour d'un axe (A₃) qui parcourt transversalement l'axe central (A₁) et un axe vertical (A₂).

7. L'outil de coupe (1) selon une des exigences de 1 à 6,
**se caractérise par le fait**
**que**, à partir de l'extrémité d'arête de coupe correspondante (7d), une zone de surface (13) en relief par rapport à la base de l'arête (7e) et reliée à cette surface latérale (3) est formée.

8. L'outil de coupe (1) selon une des exigences de 1 à 7,
**se caractérise par le fait**
**que** chaque arête de coupe (7) présente un dos d'arête (7a) déployé subordonnée à la lame principale (4) et un dos d'arête (7b) déployé subordonnée à la lame annexe (6), le dos de lame (7a) et/ou le dos de lame (7b) étant voûtés lorsque la lame principale (4) ou la lame annexe (6) sont abaissées par rapport à l'axe central (A₁).

9. L'outil de coupe (1) selon une des exigences de 1 à 8,
**se caractérise par le fait**
**que** les extrémités des lames annexes (6) sont éloignées les lunes des autres par des surfaces latérales (3) adjacentes et sont rapprochées les unes des autres par la formation de décalages (10) superposés sous un angle.

10. L'outil de coupe (1) selon une des exigences de 1 à 9,
**se caractérise par le fait**
**que** les arêtes de bordure (5) sont arrondies, notamment circulaires ou voûtées.

11. Porte-outil (15) avec un outil de coupe (1) selon l'une des exigences de 1 à 10.

12. Porte-outil (15) selon l'exigence 13,
**se caractérise par le fait**
**qu'**une cavité (16) est formée en tant que logement de plaquette avec une surface de contact (17) pour dépose de l'outil de coupe (1) avec ses surfaces de base (2) ainsi qu'avec deux surfaces de dépose (19) disposées en direction essentiellement perpendiculaire les unes par rapport aux autres pour dépose de l'outil de coupe (1) avec deux de ses surfaces latérales (3), la zone de dépose (19) de la surface latérale (3) correspondante avec les zones de surface en relief (8,9,13) en face des arêtes de coupe (7).

13. Porte-outil (15) selon l'exigence 12 ou l'exigence 13,
**se caractérise par le fait**
**que** la zone de dépose (19) présente une forme de moulage de la crête d'arête (8,9) et/ou de la zone de surface plane (13) de la zone d'appui (20) des surfaces latérales (3).

14. Porte-outil (15) selon l'exigence 12 ou l'exigence 13,
**se caractérise par le fait**
**que** la cavité (16) présente une surface de dépose essentiellement carrée (17) pour la dépose de l'outil de coupe (1) avec sa surface de base (2).

15. L'outil de coupe (15) selon une des exigences de 12 à 15,
**se caractérise par le fait**
**que** la ou chaque surface de dépose (19) est formée par un élément de dépose (23) essentiellement à base de matériau dur inséré dans la cavité (16).
